# EUROPÄISCHE PATENTANMELDUNG

(11) **EP 2 221 607 A1**
(43) Veröffentlichungstag der Anmeldung: **25.08.2010**
(21) Anmeldenummer: 10151186.3
(22) Anmeldetag: 20.01.2010
(51) Int. Cl.: G01N 21/86, G01N 21/89, G01N 33/34, D21F 7/00, D21G 9/00

(54) **Verfahren und Messvorrichtung zur optischen Erfassung und Auswertung einer Fasern beinhaltenden Bahn**

(30) Priorität: 20.02.2009 DE 102009001026
(71) Anmelder: Voith Patent GmbH, 89522 Heidenheim (DE)
(72) Erfinder: Dr. Bauer, Armin, 3100, St. Pölten (AT); Kiniger, Marianne, 1140, Wien (AT)

(57) **Zusammenfassung**

Verfahren zur optischen Erfassung und Auswertung von charakteristischen Eigenschaften, wie Störungen im Erscheinungsbild, einer Fasern, wie Zellstofffasern, beinhaltenden, insbesondere bewegten Bahn (4).

Bei dem ein erstes Licht (48) einer Lichtquelle (16, 20) mit einem ersten Wellenlängenbereich und ein zweites Licht (52) einer Lichtquelle (16, 20) mit einem zweiten Wellenlängenbereich, mit der Fasern beinhaltenden Bahn in Wechselwirkung treten.

Mindestens eine Bildkamera mit einer lichtempfindlichen Sensorvorrichtung (12) zum Generieren von Bildsignalen (60), aus dem ein Auswertsystem die charakteristischen Eigenschaften der Fasern beinhaltenden Bahn (4) ermitteln kann vorhanden ist und die Lichtquelle (16, 20) und die Sensorvorrichtung (12) ein Messsystem (2) bilden.

Erfindungsgemäß wird das erste und zweite Licht (48, 52), der mind. einen Lichtquellen (16, 20) mittels der Bildkamera, aufgefangen und innerhalb des Kameragehäuses (5) auf unterschiedliche Sensoren (21, 22) der Sensorvorrichtung (12) geleitet.

## Beschreibung

Die Erfindung betrifft ein Verfahren und eine Messvorrichtung zur optischen Erfassung und Auswertung von charakteristischen Eigenschaften, wie Störungen im Erscheinungsbild, einer Fasern, wie Zellstofffasern, beinhaltenden, insbesondere bewegten Bahn, das zumindest die folgenden Komponenten nutzt: mind. zwei Lichter aus unterschiedlichen Wellenlängenbereichen, ein von mind. einer Bildkamera, generiertes Bildsignal, wobei die Lichtquellen und die Bildkamera ein Messsystem bilden, und ein Auswertesystem.

### Stand der Technik

Insbesondere für Massendruckpapiere verlangt der Markt, ein hohes, von den Papiernutzern wahrnehmbares Qualitätsniveau. Ein wichtiger Parameter in diesem Zusammenhang ist die Schwarzsatinage, die auch als Vergrauung bezeichnet wird.

"Satinage" bezeichnet bekanntlich das Glätten der Oberfläche eines Papiers in einem Kalander, wobei der Kalander eine Vorrichtung mit einigen Walzen zum Glätten von Papier ist. Durch das Satinieren, d. h. durch das mechanische Glätten, beispielsweise unter Druck und bei hoher Temperatur, ergibt sich eine bestimmte Oberflächencharakteristik des Papiers, die teils, wie eine möglichst glatte Oberfläche, erwünscht, andernteils jedoch, wie die Vergrauung, unerwünscht ist.

In dem Artikel "Einfluss der Papierzusammensetzung auf die Schwarzsatinage von SC-Papier" von H. Praast, A. Schmidt, S. Holzhey und L. Göttsching in der Zeitschrift "Das Papier", Ausgabe ipw 9/2001 wird ausgeführt, dass durch den Satinageprozess SC-Papiere (SC steht für "supercalandered") dazu neigen, überwiegend an Faserkreuzungspunkten transparent zu werden. Verstärkt durch den Druckprozess erscheinen diese Bereiche im Auflicht dunkel und geben dem Papier ein graues Aussehen. Dieser optische Summeneffekt wird Schwarzsatinage genannt.

Zur Erfassung von Messgrößen, wie der Vergrauung, werden herkömmlich insbesondere optische Messvorrichtungen eingesetzt. Verfahren zur Überwachung, in der englischen Fachsprache als "monitoring" bezeichnet, beispielsweise von Papier- und Pappebahnen, insbesondere Verfahren zur Überwachung der Schwarzsatinage, mit Hilfe von optischen bzw. lichtempfindlichen Sensoren, wie CCD-Sensoren bzw. CCD-Kameras (CCD steht für "charge coupled device") sind, wie auch nachfolgend noch gezeigt wird, somit grundsätzlich bekannt. In der Regel wird der Datenstrom der Lichtsensoren nach der Erfassung mit Hilfe eines Auswertesystems ausgewertet bzw. analysiert, wie beispielsweise mittels digitaler Signalprozessoren bzw. mit Hilfe von Software-gestützter Bildanalyse.

Die US 4,931,657 beschreibt ein optisches System zur Online-Erfassung von Texturen einer Bahn und Textur-Sensoren, die eine Bildanalyse auf momentane von einer Video-Kamera erzeugte Bildsignale anwendet, wobei die Video-Kamera synchron mit dem Licht eines Stroboskops arbeitet. Ein in dieser Schrift beschriebener Formationstester arbeitet mit Durchlicht, während ein Schmutzzähler mit Auflicht arbeitet.

Ziel der optischen Messungen bzw. der Bildanalyse ist es, das Ausmaß und die Lokalisierung von optisch erfassbaren Parametern, wie eben der Schwarzsatinage, in der englischen Fachsprache gemäß der WO 2005/121446 A1 auch "blackening" genannt, quantifizierbar und Störungen ausregelbar zu machen.

Der oben zitierte Artikel beschreibt auch ein PC-basiertes Bildanalyse-System zur Erfassung der Schwarzsatinage, das eine im Auflicht beleuchtete, unbedruckte, schwarz hinterlegte Papierprobe mit einer Messfläche von etwa 10 mm mal 10 mm über eine Kamera mit Makroobjektiv aufnimmt.

Nachteilig bei den bisher genannten Ständen der Technik, insbesondere dem im oben zitierten Artikel beschriebenen Messsystem, ist es, dass Störungen im Erscheinungsbild einer Papierbahn, die wie die Vergrauung auf Transparenzeffekten, d. h. auf Opazitätsänderungen, beruhen oder durch Flüssigkeitstropfen verursachte Flecken, mit nur einer Art von Beleuchtung nicht eindeutig diagnostiziert werden können. Im Falle von Vergrauung sind nämlich z. B. im Auflicht eine dunkle Faser und eine halbtransparente Faser, die auf die Vergrauung hinweist, nahezu identisch. Weiterhin besteht ein Nachteil des in dem Artikel beschriebenen Standes der Technik darin, dass es sich um ein lediglich zu Forschungs- und Laborzwecken geeignetes Messsystem handelt, das für die Echtzeit-Erfassung im Produktionsbetrieb nicht verwendbar ist.

Die EP 1 749 930 A1 beschreibt eine Vorrichtung zum Behandeln einer Bahn aus Faserstoff, insbesondere einer Papier- oder Kartonbahn, mit einem Kalander mit mindestens einem Nip, durch den die Bahn läuft, und mit einer Sensoranordnung, die einen, vorzugsweise optischen, Schwarzsatinagesensor mit lichtempfindlichen Elementen und einer Lichtquelle aufweist, mit dessen Hilfe die Schwarzsatinage online, d. h. während der laufenden Produktion, vorzugsweise berührungsfrei, erfassbar ist. Die Lichtquelle, z. B. ein Blitz- oder Stroboskoplicht, strahlt auf die Bahn und emittiert bevorzugt Licht mit einer Wellenlänge, bei der die lichtempfindlichen Elemente ihre größte Empfindlichkeit aufweisen. Dies sei beispielsweise Licht im nahen Infrarotspektrum, zum Beispiel 830 nm, also die Spektrallinie von Halbleiterlasern, wobei man CCD-Sensoren verwenden könne, die in diesem Spektrum die höchste Empfindlichkeit aufweisen.

Laut EP 1 749 930 A1 kann man das Signal des Schwarzsatinagesensors verwenden, um einer Produktionssteuerung mitzuteilen, welcher Bereich der Bahn fehlerbehaftet ist. Vorzugsweise sind die Lichtquelle und die lichtempfindlichen Elemente auf der gleichen Seite der Bahn angeordnet, wobei ermittelt wird, wie viel Licht von der Oberfläche der Bahn reflektiert wird. Es sei günstig, wenn auf der den lichtempfindlichen Elementen gegenüberliegenden Seite der Bahn ein dunkles Objekt, vorzugsweise eine Walze, angeordnet ist, welches auftretende Lichtstrahlen wesentlich schlechter reflektiert als die Oberseite der Bahn, auf die die Lichtquelle gerichtet ist. Dadurch erhöht sich die Ansprechempfindlichkeit des Schwarzsatinagesensors. Die Lichtquelle und die lichtempfindlichen Elemente können auch auf unterschiedlichen Seiten der Bahn angeordnet sein. In diesem Fall sei die Ansprechempfindlichkeit praktisch umgekehrt, d. h. ein lichtempfindliches Element wird dann mit Licht beaufschlagt, wenn eine Schwarzsatinage aufgetreten ist. In den übrigen Bereichen sind die lichtempfindlichen Elemente durch die Bahn abgeschattet.

Die in der EP 1 749 930 A1 beschriebene Vorrichtung ist zwar zur Online-Messung geeignet, jedoch ist es auch bei dieser Vorrichtung nachteilig, dass Störungen im Erscheinungsbild einer Papierbahn, die wie die Vergrauung auf Transparenzeffekten, d. h. auf Opazitätsänderungen, beruhen oder durch Flüssigkeitstropfen verursachte Flecken, mit nur einer Art von Beleuchtung, wie oben ausgeführt, nicht bzw. zumindest nicht eindeutig diagnostiziert werden können.

In der noch nicht veröffentlichten Anmeldung DE 10 2008 012 152 wird zur Verbesserung der Diagnose der charakteristischen Eigenschaften, insbesondere zur Verbesserung der Unterscheidung von Opazitätsänderungen und von durch Flüssigkeitstropfen verursachte Flecken eine Vorrichtung und eine Verfahren vorgeschlagen, bei dem die Fasern beinhaltende Bahn mit zwei unterschiedlichen Lichtquellen, unterschiedlichen Farben, angestrahlt bzw. durchleuchtet wird. Durch die Verwendung eines CCD-Chips bei dem die RGB-Kanäle sehr nah aneinander liegen, ist es notwendig Wellenlängen zu wählen die eine klare Trennung zwischen Durchlicht und Auflicht ermöglichen. Trotzdem kommt es vor, dass z.B. durch optische Aufheller im Papier sich das Emissionsspektrum der Leuchtquellen verschiebt und es zu Auswertungsfehlern kommt.

Zudem kommt es aufgrund des in einem CCD-Chip verwendeten Bayer-Filters zu Fehlstellen (unbelichtete Pixel) in den einzelnen Ebenen. Diese werden dann in der Regel interpoliert, was zu Interpolationsartefakten führen kann. Auch ist ein CCD-Chip mit Bayer-Filter deutlich weniger lichtempfindlich als eine vergleichbare Monochrom-Kamera.

Ein Erscheinungsbild einer Papierbahn ist, auch im Einklang mit dem bisher Ausgeführten, ein visuell bzw. ein optisch erfassbarer Zustand der Papierbahn. Eine Störung im Erscheinungsbild ist eine durch Menschen wahrnehmbare bzw. durch optische Messsysteme bzw. Auswertesysteme auflösbare bzw. abbildbare Abweichung von einem Soll-Erscheinungsbild, welche insbesondere einer Klassifikation durch deterministische und/oder statistische Parameter, wie "lokale Vergrauung ist aufgetreten" bzw. "lokale Vergrauung ist nicht aufgetreten", zugänglich ist. Störungen im Erscheinungsbild sind beispielsweise Transparenz-Effekte von Fasern, d.h. Opazitätsänderungen, oder durch Flüssigkeitstropfen verursachte Flecken.

### Erfindung

Aufgabe der Erfindung ist es charakteristische Eigenschaften, insbesondere Störungen im Erscheinungsbild, einer bewegten Bahn mit einem verbesserten Verfahren sowie Vorrichtung zu erfassen und auszuwerten, und vorzugsweise in Echtzeit an einen Sollwert anzugleichen.

Die Aufgabe wird mittels des Verfahrens mit den Merkmalen des Anspruchs 1 und einer Vorrichtung mit den Merkmalen des Anspruches 13 gelöst.
Vorteilhafte Ausbildungen des Verfahrens sind in den Ansprüchen 2 bis 12 definiert. Eine Messvorrichtung für dieses Verfahren ist in Anspruch 13 definiert. Eine vorteilhafte Ausbildung der Messvorrichtung ist in Anspruch 14 und 16 definiert.

Das Verfahren dient zur optischen Erfassung und Auswertung von charakteristischen Eigenschaften einer Fasern beinhaltenden Bahn. Die Bahn kann insbesondere bewegt sein, beispielsweise durch eine Kalandrierstation einer Papier- oder Pappemaschine. Die Fasern können beispielsweise Zellstofffasern sein. Insbesondere kann es sich bei der Bahn um eine Papierbahn handeln. Die Fasern können auch Fasern wie Chemiefasern etc., die nicht Zellstofffasern sind, sein.

Charakteristische Eigenschaften können beispielsweise lokale Störungen im Erscheinungsbild der Bahn sein, beispielsweise Transparenz-Effekte von Fasern, d. h. Opazitätsänderungen, oder durch Flüssigkeitstropfen verursachte Flecken, Unterschiede in der Massenverteilung oder dunkle Flecken.

Das Verfahren nutzt zumindest zwei Lichter mit unterschiedlichen Wellenlängen von einer oder mehreren Lichtquellen. Unter Licht wird eine bestimmte spektrale Zusammensetzung eines elektromagnetischen Wellenfeldes verstanden, die zumindest Frequenzanteile im für Menschen bzw. für das erfindungsgemäße nachfolgend beschriebene Messsystem sichtbaren Bereich enthält. So kann das Licht auch Infrarotstrahlung sein. Das Licht kann auch Ultraviolettanteile enthalten. Insbesondere kann das Licht Anteile im Wellenlängenbereich von ca. 330 bis 1000 nm enthalten.

Das Verfahren nutzt weiterhin mindestens eine Bildkamera, die mindestens eine lichtempfindliche Sensorvorrichtung enthält, zum Generieren von Bildsignalen.

Die Lichter und die Bildkamera mit der lichtempfindlichen Sensorenvorrichtung bilden jeweils ein Messsystem, insbesondere mit dem sich das Erscheinungsbild der Bahn erfassen lässt.

Das Verfahren nutzt weiterhin ein Auswertesystem. Das Auswertesystem kann aus den Messsystemen die interessierenden charakteristischen Eigenschaften, wie die Vergrauung etc., aus dem Erscheinungsbild bzw. aus von dem Erscheinungsbild abgeleiteten Beschreibungsparametern ermitteln. Die Ermittlung der charakteristischen Parameter erfolgt vorzugsweise online, d. h. während des laufenden Betriebes. Die Ermittlung erfolgt weiterhin vorzugsweise in Echtzeit.

Erfindungsgemäß umfasst das Verfahren die Nutzung von zwei unterschiedlichen Lichtern, die aus einer oder unterschiedlichen Lichtquellen stammen können. Es können auch mehr als zwei Lichtquellen, vorzugsweise drei Lichtquellen vorhanden sein.

Erfindungsgemäß unterscheiden sich die zwei Lichter durch ihre unterschiedlichen Wellenlängen. Unter unterschiedlichen Wellenlängen wird hier insbesondere Licht mit einem Bandspektrum eines chromatischen Lichtes und einem Infrarot-Licht verstanden.

Wobei das erste Licht mit einem ersten Wellenlängenbereich vorzugsweise zwischen 330 bis 650 nm liegt und das zweite Licht mit einem zweiten Wellenlängenbereich zwischen 730 bis 1000 nm.

Für das erste Licht kann vorzugsweise ein Licht aus dem Wellenlängenbereich der RGB-Farben verwendet werden, wobei R für ein Rot, B für ein Blau und G für ein Grün steht.

Wobei für das erste Licht aus dem Wellenlängenbereich der RGB-Farben auf der Empfangsseite oder Kameraseite ein erster Sensor z.B. ein CCD-Chip und für das zweite Licht aus dem Wellenlängenbereich der IR-Lichtes ein zweiter Sensor z.B. ein IR-Detektor zur Verfügung steht.

Ein Licht kann insbesondere auch nur aus einer einzigen Spektrallinie bestehen, wie sie beispielsweise von einem Halbleiterlaser ausgesendet werden kann.

Die beiden Lichter treten mit der Fasern beinhaltenden Bahn in Wechselwirkung, d. h. ein Licht wird von der Bahn zumindest teilweise reflektiert bzw. zumindest teilweise transmittiert. Ein auf die Bahn auftreffender Teil eines von dieser zumindest teilweise reflektierten Lichtes heißt ein Auflicht. Ein von der Bahn zumindest teilweise transmittiertes, d. h. durchgelassenes Licht, heißt Durchlicht. In einer Ausführungsform können die beiden Lichter von der gleichen Seite auf die bewegte Bahn gestrahlt sein, sodass zwei Auflicht-Erscheinungsbilder in voneinander unterschiedlichen Wellenlängenbereichen generierbar sind. In einer anderen Ausführungsform können die beiden Lichter mit unterschiedlichen Wellenlängen von unterschiedlichen Seiten auf die Bahn gestrahlt sein, sodass zumindest ein Auflicht-Erscheinungsbild und zumindest ein Durchlicht-Erscheinungsbild generierbar sind. Genauso ist eine Variante denkbar bei der beide Lichter von unten auf die bewegte Bahn strahlen, sodass zwei Durchlicht-Erscheinungsbilder in voneinander unterschiedlichen Wellenlängenbereichen generierbar sind.

Erfindungsgemäß werden die beiden Lichter mit unterschiedlichen Wellenlängenbereichen innerhalb der Bildkamera getrennt und auf unterschiedliche lichtempfindliche Sensoren geleitet. Von jedem Sensor wird, aus dem auf ihn gelenkten Licht, ein Bildsignal generiert. Aus den unterschiedlichen Bildsignalen kann das Auswertesystem die charakteristischen Eigenschaften der Fasern beinhaltenden Bahn ermitteln.

Die Trennung der Lichter mit den unterschiedlichen Wellenlängenbereichen erfolgt erfindungsgemäß mittels eines Prismas oder mittels halbtransparenter Spiegel.
Der Vorteil des erfindungsgemäßen Verfahrens besteht darin, dass durch die Wechselwirkung der Bahn mit mindestens zwei Lichtern mit unterschiedlichen Wellenlängenbereichen die Zuordnung der jeweiligen ermittelten charakteristischen Eigenschaft zu einer zu ermittelnden Störung im Erscheinungsbild eindeutig durchführbar ist.

Insbesondere besteht ein großer Vorteil des Verfahrens darin, dass aus der Kombination der beiden aufgenommenen Bilder, z.B. der Überlagerung der Bilder, mittels bildanalytischer Verfahren z.B. transparente Stellen deutlich besser lokalisiert werden können.

Wenn nun eine transparent gewordene Faser bzw. eine Faserkreuzung mit einem ersten Licht bestrahlt wird, erscheinen sie dunkel, wobei dieselbe Faser bzw. Faserkreuzung mit einem zweiten Licht durchleuchtet hell erscheint.

Durch die Kombination der beiden Bilder lässt sich eine besser auswertbare Kombinationsaufnahme generieren.

Aufgrund der zuverlässigen, lokal zuordnenbaren Feststellung eines Transparenzeffektes kann, insbesondere bei zeitlich gehäuftem Auftreten des Effektes, an der lokalen Stelle, wie einer bestimmten Position in Maschinenbreite gesehen, innerhalb einer Papierbahn, dieser vorzugsweise zonal bzw. lokal angepasst, ausgeregelt werden.

Die statistische Häufigkeit von Fehldiagnostizierungen von insbesondere vollautomatisch zu ermittelnden und auszuregelnden Störungen im Erscheinungsbild kann auf diese Weise vorteilhafterweise deutlich reduziert werden

Vorteilhafterweise emittiert mindestens eine erste Lichtquelle Licht mit einem ersten Wellenlängenbereich und mindestens eine zweite Lichtquelle Licht mit einem zweiten Wellenlängenbereich. Auf diese Weise kann sehr einfach die eine Lichtquelle auf der einen Seite der Bahn, beispielsweise oberhalb oder unterhalb der Bahn, und die andere Lichtquelle auf der anderen Seite der Bahn angeordnet werden. Durch die Auftrennung in zwei räumlich separate Lichtquellen können die Farblichter weiterhin vorteilhafterweise auch einfach aus unterschiedlichen Richtungen auf bzw. durch die Bahn hindurch gestrahlt werden. Beispielsweise kann das Auflicht von schräg oberhalb und das Durchlicht von senkrecht unterhalb der Bahn aufgestrahlt werden.

Die Bildsignale der mindestens zwei lichtempfindlichen Sensoren liefern mindestens zwei Bilder die über das Auswertesystem einer Bildanalyse zuführbar sind.

Das Auswertesystem kommuniziert vorzugsweise mit einem Leitsystem. Jedes Bild ist insbesondere ein digitales oder zumindest ein digitalisierbares Bild. Mit Hilfe der Bildanalyse ist eine Gestaltdetektion durchführbar. Eine Gestaltdetektion kann insbesondere die, beispielsweise mit Standard-Bildverarbeitungsalgorithmen ausführbare Detektion einer lokalen Struktur umfassen. Die Bildanalyse ermöglicht vorteilhafterweise die vollautomatische Auswertung von Bildern in dem Auswertesystem.

Besonders vorteilhaft ist es, wenn eine mittels der Gestaltdetektion in dem Bild aufgefundene lokale Struktur den ersten Wellenlängenbereich mit einer ersten Ausprägung, wie dunkel oder hell, und den zweiten Wellenlängenbereich mit einer zweiten Ausprägung, wie dunkel oder hell, aufweist. Auf diese Weise kann vorteilhafterweise die Klassifikation und Feststellung der Ausprägung einer Störung einer charakteristischen Eigenschaft im Erscheinungsbild der Bahn präzise und eindeutig durchgeführt werden.

Überaus vorteilhaft ist es, wenn aus der Kombination des ersten und des zweiten Wellenlängenbereiches einer lokalen Struktur Rückschlüsse auf die charakteristischen Eigenschaften der bewegten, Fasern beinhaltenden Bahn ziehbar sind.
So ist für eine gefundene lokale Struktur die in der folgenden Tabelle zusammengefassten Interpretationsmöglichkeiten des aufgetretenen Effektes möglich:

| Auflicht IR-Licht | Durchlicht Weißlicht | Interpretation |
|---|---|---|
| dunkel | dunkel | Dunkler Fleck, z. B. schwarze Faser |
| hell | dunkel | Höhere Masse an dieser Stelle der Bahn |
| dunkel | hell | Transparenzeffekt, z. B. Schwarzsatinage bzw. Blackening |
| dunkel | hell | Geringere Masse an dieser Stelle der Bahn |

Das bedeutet im Ergebnis vorteilhafterweise, dass insbesondere Transparenzeffekte einfach und eindeutig nachweisbar sind. Günstigerweise ist mit diesem Verfahren auch die mittlere Transparenz und/oder die mittlere Masse und /oder die mittlere Schmutzpunkthäufigkeit (dunkle Flecken) der Bahn ermittelbar.

So ist es möglich ein Erfahrungs- und /oder Regelwissen aufzubauen und typische Erscheinungsformen in den Bildern automatisch zu Kategorisieren. Beispielsweise kann eine Kategorie ein Loch in der Bahn mit einer Größe von 2-4mm² entsprechen und eine andere Kategorie einem dunklen Schmutzfleck mit länglicher Form. Die Kategorien können entweder als Regel definiert oder durch Lernverhalten automatisch gebildet werden. Auch eine Kombination ist denkbar.

Zusätzlich kann ein drittes Licht mit einem dritten, von der ersten und der zweiten unterschiedlichen, Wellenlängenbereich mit der Fasern beinhaltenden Bahn in Wechselwirkung treten.

Vorzugsweise ist die Art der Wechselwirkung des dritten Lichtes mit der Bahn eine Streifung, d. h. der Einfallswinkel des dritten Lichtes auf die Bahn ist so flach, dass ein Auflichtbild, jedoch in der Art einer Streiflichtbeleuchtung im Blickfeld mindestens einer Kamera, entsteht. Im Streiflicht sind vorteilhafterweise insbesondere lokale Topographieunterschiede der Fasern beinhaltenden Bahn, wie Rakelstreifen, Siebmarkierungen, Narbigkeit etc., detektierbar. Das Streiflichtbild entsteht somit aus dem dritten Licht, wobei dieses flacher auf die Bahn einfällt, als das erste bzw. zweite Licht, das für das Auflichtbild verwendet wird.

Vorteilhaft ist es des Weiteren, wenn der Einfluss eines nicht von der mindestens einen Lichtquelle emittierten Hintergrundlichtes auf das Bild kompensierbar ist. Dies kann vorzugsweise mit Hilfe von Referenzbildern geschehen. Durch die Kompensation des Hintergrundlichtes wird die Auswertung der Bildsignale vereinfacht und erleichtert.

Besonders vorteilhaft ist es weiterhin, wenn in der Bildanalyse die Farbe der Fasern beinhaltenden Bahn berücksichtigt wird. Die Farbe der Fasern wird vorzugsweise während einer Wechselwirkung der Fasern beinhaltenden Bahn mit einem Licht ermittelt. Das Licht zur Ermittlung kann das erste, zweite, dritte Licht oder ein anderes Licht sein. Beispielsweise kann, optional zusätzlich, ein UV-Licht, zur Ermittlung der Farbe der Fasern genutzt werden. Diese Ermittlung wird vorzugsweise vor verschiedenfarbigen Hintergründen durchgeführt. Durch die Berücksichtigung der Eigenfarbe der Fasern wird die Auswertung der Bildsignale weiter vereinfacht und erleichtert.

Die Erfindung umfasst weiterhin eine Messvorrichtung zur optischen Erfassung und Auswertung von charakteristischen Eigenschaften, wie Störungen im Erscheinungsbild, einer bewegten Fasern, wie Zellstofffasern, beinhaltenden Bahn. Die Messvorrichtung nutzt dazu zumindest die folgenden Komponenten: ein erstes Licht einer Lichtquelle mit einem ersten Wellenlängenbereich, ein zweites Licht einer Lichtquelle mit einem zweiten Wellenlängenbereich und mindestens eine Bildkamera mit mindestens einer Sensorvorrichtung zum Generieren von Bildsignal und ein Auswertesystem.

Innerhalb des Kameragehäuses ist eine Vorrichtung angeordnet, die das erste und zweite Licht entsprechend der Wellenlänge auf unterschiedliche Sensoren lenkt, die auf der Sensorvorrichtung positioniert sind.

Die Vorrichtung kann ein Prisma oder halbtransparente Spiegel sein.

Die Messvorrichtung realisiert erfindungsgemäß das Verfahren nach einem der Ansprüche 1 bis 12 realisiert. Das Auswertsystem und die Bildkamera können dabei auch in einem Gehäuse untergebracht sein bzw. eine Einheit bilden.

Weiterhin ist es vorteilhaft, wenn ein erstes und ein zweites, von dem ersten unstörbares, verfahrensgemäßes Messsystem vorhanden sind. Dadurch können vorteilhafterweise unterschiedliche Seiten der Bahn, wie die Oberseite und die Unterseite der Bahn, separat erfasst werden.

Auch können vorzugsweise ein erstes und ein zweites Auswertesystem vorhanden sein. Das erste Messsystem kann in diesem Fall im Zusammenwirken mit dem ersten Auswertesystem charakteristische Eigenschaften einer ersten Seite, wie der Oberseite, der Fasern beinhaltenden Bahn erfassen bzw. ermitteln, während das zweite Messsystem im Zusammenwirken mit dem zweiten Auswertesystem, vorzugsweise simultan zu der ersten Mess-/Auswerteeinheit, charakteristische Eigenschaften einer anderen zweiten Seite, wie der Unterseite, der Fasern beinhaltenden Bahn erfassen bzw. ermitteln kann. Einerseits werden zwar durch die Vervielfachung der Systeme der Hardwareaufwand und damit die Materialkosten erhöht, jedoch wird andererseits die Qualität der Bahn deutlich reicher, insbesondere informationsreicher, erfass- und auswertbar. Die beidseitige Erfassung und Auswertung der Bahneigenschaften ist insbesondere bei Faserprodukten vorteilhaft, bei denen beide Seiten, also die Ober- und die Unterseite, vom Produktnutzer in seiner Qualitätsbeurteilung herangezogen werden.

Besonders vorteilhaft ist es weiterhin, wenn das Auswertesystem die charakteristischen Eigenschaften der Fasern beinhaltenden Bahn im Zusammenwirken mit dem Messsystem in Echtzeit ermittelt. "In Echtzeit" bedeutet hier, dass die Ermittlung so schnell erfolgt, dass mit Hilfe einer Rückkoppelung von die charakteristischen Eigenschaften abbildenden physikalischen Größen Störungen im Erscheinungsbild der Fasern beinhaltenden Bahn ausregelbar sind. Kurz durch die Echtzeit-Ermittlung ist die erfindungsgemäße Mess-/Auswertekombination vorteilhafterweise in eine bestehendes Regelungssystem einbindbar. Die rückgekoppelten physikalischen Größen können vorzugsweise ein elektrischer Strom bzw. eine elektrische Spannung sein.

### Figurenbeschreibung

Weitere Merkmale und Vorteile der Erfindung ergeben sich aus der nachfolgenden Beschreibung bevorzugter Ausführungsbeispiele unter Bezugnahme auf die Zeichnung.

Es zeigen:
- Fig. 1: eine schematische Ansicht einer Ausführungsform einer das erfindungsgemäße Verfahren realisierenden Messvorrichtung
- Fig. 2: zeigt die einzelnen Bilder die von den Sensoren aufgenommen wurden und das entstehende Gesamtbild zur besseren Bewertung
- Fig. 3: Diagramm mit der selektiven spektralen Empfindlichkeit eines RGB-CCD-Sensors in Abhängigkeit von der Wellenlänge.
- Fig. 4: Diagramm mit den Wellenlängenbereichen von sichtbarem und IR Licht

Die Messvorrichtung 1 implementiert ein Verfahren zur optischen Erfassung und Auswertung der lokalen Vergrauung der Papierbahn 4, welche hier eine Ausbildung einer charakteristischen Eigenschaft im Sinne einer Störung im Erscheinungsbild der Papierbahn 4 ist. Die Papierbahn 4 enthält, wie bekannt, Zellstofffasern. Die Bahn 4 ist hier bewegt, d. h. sie bewegt sich relativ zu der Messvorrichtung 1. Es könnte auch umgekehrt sein, nämlich die Fasern beinhaltende Bahn 4 ruht relativ zur Umgebung und die Messvorrichtung wird bewegt, beispielsweise in einer Art zeilenförmigem Scanvorgang.

Die Messvorrichtung 1 nutzt in der ersten Ausführungsform die folgenden Komponenten: Ein erstes Licht 48 einer ersten Lichtquelle 16 mit einem ersten Wellenlängenbereich und ein zweites Licht 52 einer zweiten Lichtquelle 20 mit einem zweiten Wellenlängenbereich. Die Lichtquelle 16 kann z.B. ringförmig ausgebildet sein und strahlt ein erstes Licht 48 mit einer Wellenlänge zwischen 730 bis 1000 nm also IR-Licht aus. Das zweite Licht 52 durchleuchtet die Bahn 4 von unten mit z.B. einer Wellenlänge zwischen 330nm und 650nm.

Weiterhin nutzt die Messvorrichtung 1 eine Sensorvorrichtung 12, hier in einem Kameragehäuse 5 untergebracht, bestehend aus zwei unterschiedlich lichtempfindlichen Sensoren 21; 22, mit denen Bildsignal 60 generiert werden können.

Die beiden Sensoren 21, 22 unterscheiden sich durch ihre Lichtempfindlichkeit für bestimmte Wellenlängenbereiche, damit auf jeden Sensor 21, 22 das für ihn bestimmte Licht trifft, gehört zur Messvorrichtung 1 ein Prisma 6, welches das durch die Linse 7 in das Kameragehäuse 5 eintretende Licht entsprechend der Wellenlänge unterschiedlich bricht und so auf die Sensoren 21, 22 leitet bzw. len kt.

Die Lichtquelle 16 ist oberhalb der Sensorvorrichtung 12 angeordnet. Die Sensorvorrichtung 12 selbst ist etwas oberhalb der Oberseite der Bahn 4 angeordnet. Der Abstand zwischen Sensorvorrichtung 12 und Bahn 4 kann je nach den Erfordernissen bzw. Möglichkeiten dem Einsatzfall angepasst werden. Der Abstand muss jedoch so ausreichend sein, dass aus dem Bildsignal 60 der Sensorsvorrichtung 12 ein scharfes Bild der Oberfläche der Bahn 4 generiert werden kann. Der Durchmesser der ringförmigen Lichtquelle 16 ist so groß, dass das von ihr in Richtung zur Bahn 4 emittierte Licht 48 ungehindert, d. h. insbesondere vom Sensorvorrichtung 12 unabgeschattet, seitlich umfänglich an dem Sensorvorrichtung 12, vorbei strahlen kann. Die Lichtquelle 20 ist unterhalb der Bahn 4 angeordnet. Das Licht 52 tritt somit zumindest teilweise durch die Bahn 4 hindurch und kann von der Sensorvorrichtung 12 empfangen werden.

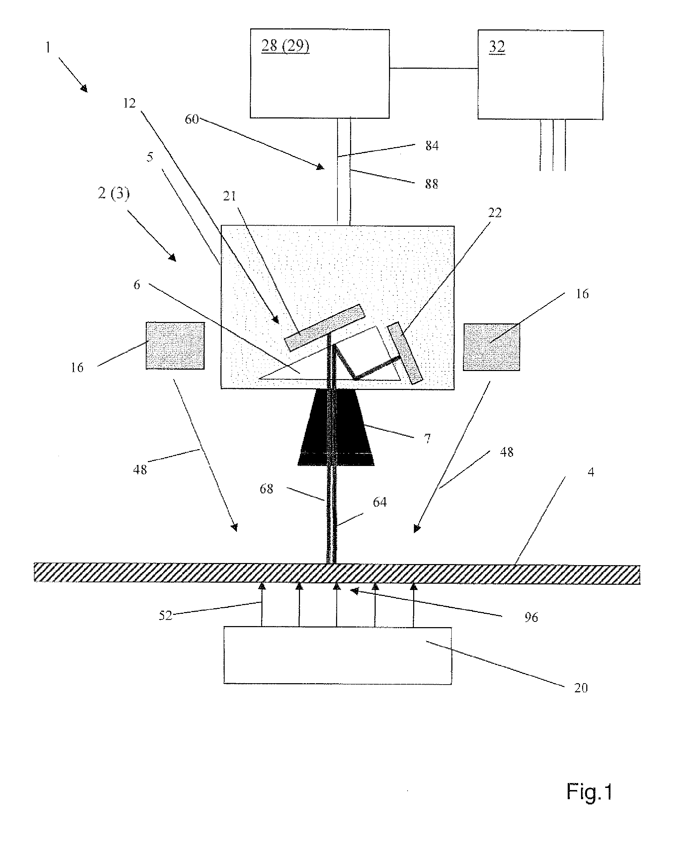

Die Lichtquellen 16, 20 und die lichtempfindlichen Sensoren 21, 22 bilden ein Messsystem 2, welches in Fig. 1 gezeigt ist.

Weiterhin nutzt die Messvorrichtung 1 ein Auswertesystem 28 zur Auswertung des Bildsignals 60.

Die beiden Lichter 48, 52 treten mit der Fasern beinhaltenden Bahn 4 in Wechselwirkung. Das erste Licht 48 wird nach der Wechselwirkung mit der Bahn zumindest teilweise von der Oberfläche der Bahn in Richtung zum Sensorvorrichtung 12 reflektiert. Das zweite Licht 52 durchstrahlt zumindest teilweise von der Unterseite her kommend die Bahn 4. Beide Lichter 48, 52 werden nach der Wechselwirkung mit der Bahn vom Sensorvorrichtung 12 empfangen.

Die lichtempfindliche Sensorvorrichtung 12 generiert aus den von ihr empfangenen Teilen des ersten und des zweiten Lichtes 48, 52 zwei Bildsignale 60. Aus den Bildsignalen 60 kann das Auswertesystem 28 die charakteristischen Eigenschaften der Fasern beinhaltenden Bahn 4, hier die lokale Vergrauung, ermitteln.

Ein von der Fasern beinhaltenden Bahn 4 reflektierter Anteil 64 des ersten Lichtes 48 und ein von der Fasern beinhaltenden Bahn 4 durchgelassener Anteil 68 des zweiten Lichtes 52 wird von dem lichtempfindlichen Sensoren 21,22 empfangen.

Die Bildsignal 60 der lichtempfindlichen Sensoren 21, 22 können über einen ersten und einen zweiten Farbkanal 84, 88 an das Auswertsystem übertragen werden. Die Farbkanäle 84, 88 können durch separate physische Mittel, wie hier Busleitungen, oder mithilfe eines Übertragungsverfahrens, wie einem Multiplex-Verfahren, auf einem gemeinsamen Bus übertragen werden.

Der lichtempfindliche Sensor 21 ist hier ein CCD-Chip, der Licht im sichtbaren Bereich verarbeiten kann. Der lichtempfindliche Sensor 22 ist hier ein CCD-Chip der Licht im IR Bereich verarbeiten kann.

Das Auswertesystem 28 kommuniziert hier mit einem Leitsystem 32. Das Leitsystem 32 kann Prozessparameter, wie die Zugabe von die Vergrauung beeinflussenden Hilfsstoffen, steuern bzw. regeln.

In dem Auswertesystem 28 ist mit Hilfe der Bildsignale 60 der lichtempfindlichen Sensoren 21, 22 Bilder einer Bildanalyse zuführbar. Das Bild ist hier ein digitales Bild. Mit Hilfe der Bildanalyse ist, hier in Echtzeit, eine Gestaltdetektion, hier eine Detektion einer lokalen Struktur 96 durchführbar. Die lokale Struktur 96 besitzt hier, insoweit der Transparenzeffekt der Vergrauung festgestellt werden soll, die Gestalt von einander kreuzenden Fasern bzw. von transparenten Faserlinien.

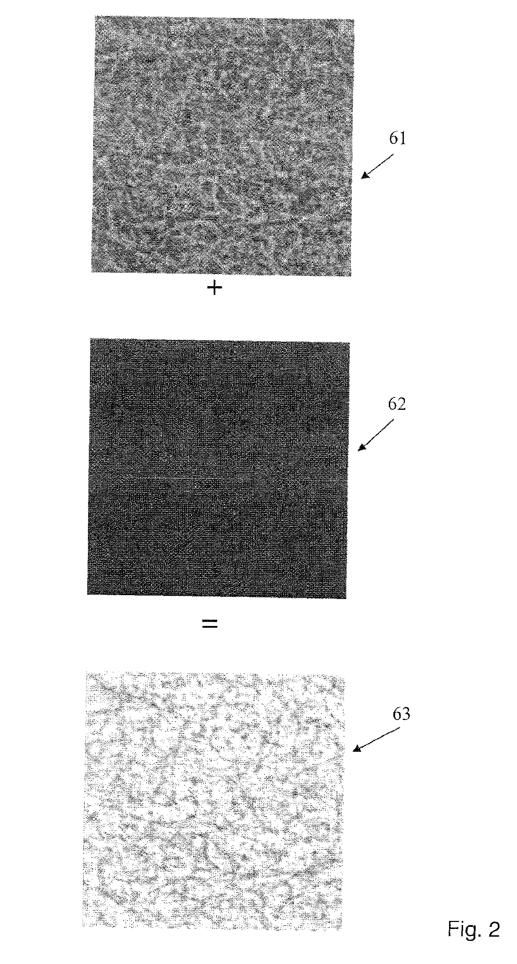

Eine mittels der Gestaltdetektion in den Bildern aufgefundene lokale Struktur 96 weist den ersten Wellenlängenwert mit einer ersten Ausprägung, hier dunkel oder hell, und den zweiten Wellenlängenwert mit einer zweiten Ausprägung, hier ebenfalls dunkel oder hell, auf, wie in Fig. 2 zu erkennen ist.

Aus der Kombination des ersten und des zweiten Bildes sind insbesondere Rückschlüsse auf die charakteristischen Eigenschaften, hier die lokale Vergrauung, der bewegten, Fasern beinhaltenden Bahn 4 ziehbar. Hierzu werden die Werte von wenigstens zwei Wellenlängenbereichen miteinander kombiniert.

Der Einfluss eines nicht von einer der Lichtquellen 16, 20 emittierten Hintergrundlichtes auf das Bild ist kompensierbar. Diese Hintergrundlicht-Kompensation wird hier mit Hilfe von Referenzbildern vorgenommen.

In der Bildanalyse wird die Farbe der Fasern beinhaltenden Bahn 4 berücksichtigt. Die Farbe der Fasern beinhaltenden Bahn 4 wird hier während einer Wechselwirkung der Fasern beinhaltenden Bahn 4 mit dem ersten und dem zweiten Licht 48, 52 und zusätzlich einem UV-Licht, und zwar vor verschiedenfarbigen Hintergründen, ermittelt. Bei den zur Ermittlung der Bahnfarbe angefertigten Bildern kommt es nicht so sehr auf lokale Muster an, sondern auf die mittlere Farbe am Messort.

Wie nunmehr gezeigt wurde, realisiert die Messvorrichtung 1 das erfindungsgemäße Verfahren.

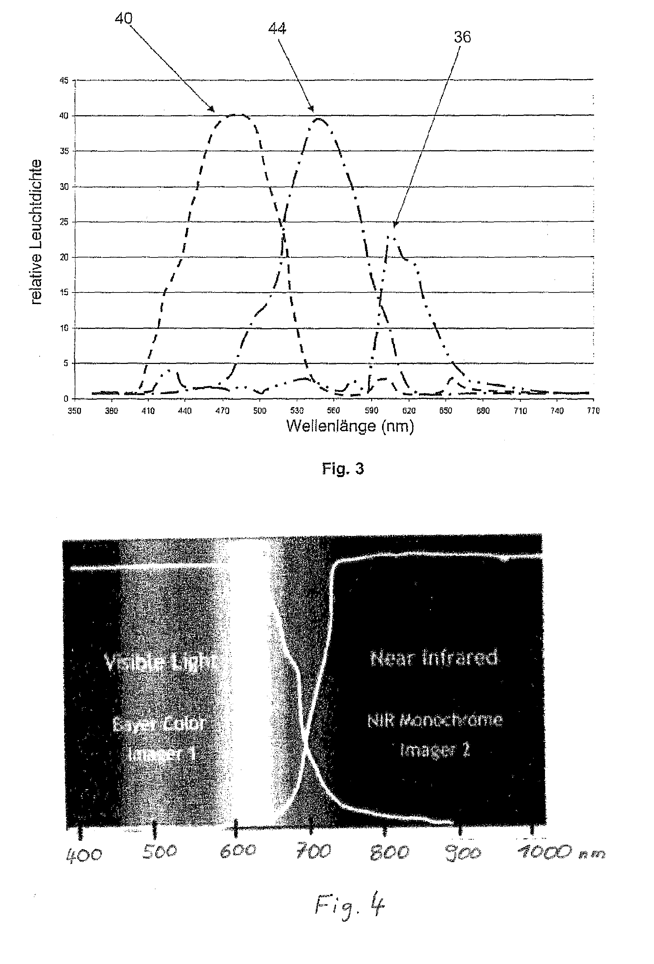

In Fig. 3 ist ein typisches Spektrum einer CCD-Kamera mit RGB-Bildaufnahme dargestellt. Das Diagramm zeigt eine erste, eine zweite und eine dritte spektrale Sensorcharakteristik 36, 44, 40. Die Einheit der Ordinate ist die relative Leuchtdichte, im Englischen "relative luminance". Die relative Leuchtdichte folgt bekanntlich der fotometrischen Definition der Leuchtdichte, deren SI-Einheit cd/m2 ist. Die Werte der relativen Leuchtdichte sind gegenüber der Leuchtdichte jedoch auf einen Bereich von 1 bis 100 bezogen auf ein Referenz-Weiß normalisiert. Alle drei Sensorcharakteristiken sind in einer modernen Videokamera verfügbar. Somit können die drei oben beschriebenen Farben Rot, Grün und Blau selektiv ausgewertet werden. Blau und Rot sind sehr einfach durch geeignet Farbwahl der Beleuchtung separierbar. Das grüne Licht, beispielsweise zwischen ca. 560 und 590 nm, spricht nur den Grün-Sensor der Kamera an.

In Fig.4 ist in einem Diagramm aufgezeigt, welcher Sensortyp für welchen Wellenlängenbereich geeignet ist. So ist deutlich zu erkennen, dass die Kurven für sichtbares Licht und IR-Licht in einem Wellenlängenbereich zwischen 630 bis 730 nm einen Bereich haben, in denen keiner der Sensoren, CCD mit Bayer-Filter und der Monochromsensor, ein gutes Bildergebnisse bringen kann, da die Lichtempfindlichkeit in diesem Bereich stark eingeschränkt ist.

Zusammenfassend kann somit gesagt werden: Die Messvorrichtung 1 stellt eine Online-Messvorrichtung dar. Das erfindungsgemäße Verfahren und die Messvorrichtung 1 nutzen die Tatsache, dass Störungen im Erscheinungsbild Faserbahn, insbesondere solche, die auf Transparenzeffekten beruhen im Auflicht anders wahrgenommen werden als im Durchlicht. Dazu gehören Vergrauung, d. h. Transparenzeffekte von Fasern, sowie Flecken verursacht durch Flüssigkeitstropfen. Es werden mindestens zwei Beleuchtungen verwendet, weil die beschriebenen Arten von Störungen mit nur einer Art von Beleuchtung nicht eindeutig diagnostiziert werden können. Im Falle von Vergrauung ist jedoch z. B. im Auflicht eine dunkle Faser und eine halbtransparente Faser, die auf Vergrauung hinweist nahezu identisch. Daher erfolgt die Aufnahme derselben Probe mit zwei Bildern. Ein Bild in Auflicht, ein weiteres Bild in Durchlicht. Wenn nun im Auflicht eine Papierfaser dunkel erscheint, im Durchlicht dieselbe Faser jedoch hell - dann ist das ein eindeutiger Hinweis auf einen Transparenzeffekt.

Eine andere Möglichkeit wäre die Verwendung von Auflicht und zwei verschiedenen Hintergründen (z.B. Schwarz und Weiß). Auch so können lokale Transparenzeffekte (Opazitätsänderungen) erkannt werden.

Das Verfahren bzw. die Messvorrichtung gestattet die Online Messung von Transparenzeffekten der Bahn 4 und die Zuordnung der Transparenzeffekte zu Ursachen, wie Vergrauung und/oder Masseverteilung durch nur eine Sensorvorrichtung 12 in einem Kameragehäuse 5 während der Produktion einer Bahn 4. Die zusätzliche Messung von Topographieeigenschaften der Bahn 4 und insbesondere auch der Dicke der Bahn sind möglich.

Insbesondere ist zu achten, dass der Bereich der Tiefenscharfe des Objektivs der Kamera nicht verlassen wird.

Somit kann die Kamera an einem Ort der Papierbahn fest eingebaut sein. Es können alternativ viele Kameras in Maschinenquerrichtung der Papierbahn angeordnet sein. Es kann aber auch eine Kamera mit Beleuchtung auf einem traversierenden Messwagen angeordnet sein.

Die Bildaufnahmezeit, charakterisiert durch Größen wie die Blitzdauer bzw. die Verschlusszeit, muss so gewählt werden, dass auch an einer bewegten Bahn die interessierenden lokalen Objekte genügend scharf für eine Auswertung abgebildet werden. Im Falle von Papierfasern ist eine Bildaufnahmedauer von 1 µsec oder geringer anzustreben.

Die Vorteile der Erfindung bestehen darin, dass Transparenzeffekte lokalisierbar sind und Masseschwankungen von Dickenschwankungen unterschieden werden können. Das heißt, Unterschiede in der Opazität der Faserbahn können nach ihrer Herkunft unterschieden werden.

Außerdem können auch lokale Dickeunterschiede bzw. Topografiestrukturen festgestellt werden.

Damit können, je nach festgestellter Papiereigenschaft, die der Fachmann im Hinblick auf die Einbindung der Erfindung in eine Regelung als Ist-Wert betrachtet, Aktionen ausgelöst werden, um die Papiereigenschaft im Hinblick auf einen Soll-Wert zu korrigieren. Das kann automatisch erfolgen oder durch einen Bediener.

Des Weiteren ist eine weitere Ausführungsform mit zwei Messsystemen 2 vorstellbar, wobei dann auf jeder Seite der Faserstoffbahn jeweils eine Vorrichtung angeordnet wird. Das erste Messsystem erfasst und ermittelt im Zusammenwirken mit dem ersten Auswertesystem 28 die lokale Vergrauung der Oberseite der Fasern beinhaltenden Bahn 4, während das zweite Messsystem im Zusammenwirken mit dem zweiten Auswertesystem eine weitere charakteristische Eigenschaft und zwar der Unterseite der Fasern beinhaltenden Bahn 4 erfasst und ermittelt. Das zweite Messsystem ermittelt hier ebenfalls die lokale Vergrauung, und zwar jene der Unterseite der Bahn 4. Beide Auswertesysteme sind mit dem Leitsystem 32 verbunden.

### Bezugszeichenliste

- 1: Messvorrichtung
- 2: (erster) Messsystem
- 3: zweites Meßsystem
- 4: Fasern beinhaltende Bahn
- 5: Kameragehäuse
- 6: Prisma
- 7: Linse
- 8: Umlenkwalze
- 12: erste Sensorvorrichtung
- 16: erste Lichtquelle
- 20: zweite Lichtquelle
- 21: erster Sensor
- 22: zweites Sensor
- 28: Auswertesystem
- 29: zweites Auswertsystem
- 32: Leitsystem
- 36: erste spektrale Sensorcharakteristik
- 40: zweite spektrale Sensorcharakteristik
- 44: dritte spektrale Sensorcharakteristik
- 48: erstes Licht
- 52: zweites Licht
- 60: Bildsignal
- 61: erstes Bild
- 62: zweites Bild
- 63: überlagertes Bild
- 64: reflektierter Anteil
- 68: durchgelassener Anteil
- 84: erster Signalkanal
- 88: zweiter Signalkanal
- 96: lokale Struktur

## Patentansprüche

1. Verfahren zur optischen Erfassung und Auswertung von charakteristischen Eigenschaften, wie Störungen im Erscheinungsbild, einer Fasern, wie Zellstofffasern, beinhaltenden, insbesondere bewegten Bahn (4), das zumindest die folgenden Komponenten nutzt:
- ein erstes Licht (48) einer Lichtquelle (16, 20) mit einem ersten Wellenlängenbereich, ein zweites Licht (52) einer Lichtquelle (16, 20) mit einem zweiten Wellenlängenbereich, die mit der Fasern beinhaltenden Bahn in Wechselwirkung treten und
- mindestens eine Bildkamera mit einer lichtempfindlichen Sensorvorrichtung (12) zum Generieren von Bildsignalen (60), aus dem ein Auswertsystem die charakteristischen Eigenschaften der Fasern beinhaltenden Bahn (4) ermitteln kann, wobei
- Lichtquelle (16, 20) und Sensorvorrichtung (12) ein Messsystem (2) bilden
**dadurch gekennzeichnet, dass**
das erste und zweite Licht (48, 52), der mind. einen Lichtquellen (16, 20) mittels der Bildkamera, aufgefangen und innerhalb des Kameragehäuses (5) auf unterschiedliche Sensoren (21, 22) der Sensorvorrichtung (12) geleitet werden.

2. Verfahren nach Anspruch 1,
**dadurch gekennzeichnet, dass**
die Lichter (48, 52), der mind. einen Lichtquellen, mittels eines Prismas (6) auf die unterschiedlichen Sensoren (21, 22) der Sensorvorrichtung (12) geleitet werden.

3. Verfahren nach Anspruch 1,
**dadurch gekennzeichnet, dass**
die Lichter (48, 52), der mind. einen Lichtquellen, mittels halbtransparenter Spiegel auf die unterschiedlichen Sensoren (21, 22) der Sensorvorrichtung (12) geleitet werden.

4. Verfahren nach einem der vorhergehenden Ansprüche,
**dadurch gekennzeichnet, dass**
die Lichter (48, 52), der mind. einen Lichtquellen, zwei unterschiedliche Sensortypen (21, 22) geleitet werden.

5. Verfahren nach einem der vorhergehenden Ansprüche,
**dadurch gekennzeichnet, dass**
das erste Licht (48) ein Auflicht ist welches zumindest teilweise von der Fasern beinhaltenden Band (4) reflektiert wird und das zweite Licht (52) ein Durchlicht ist welches zumindest teilweise von der Fasern beinhaltenden Band (4) transmittiert wird.

6. Verfahren nach einem der vorhergehenden Ansprüche,
**dadurch gekennzeichnet, dass**
das erste Licht (48) ein Licht mit einer Wellenlänge zwischen 330nm und 650nm ist.

7. Verfahren nach einem der vorhergehenden Ansprüche,
**dadurch gekennzeichnet, dass**
das zweite Licht (52) ein Licht mit einer Wellenlänge zwischen 730nm und 1000nm ist.

8. Verfahren nach Anspruch 1,
**dadurch gekennzeichnet, dass**
die Bildkamera mindestens zwei Bildsignale (60) mittels der mindestens zwei Sensoren (21, 22) generiert.

9. Verfahren nach einem der vorhergehenden Ansprüche,
**dadurch gekennzeichnet, dass**
ein Sensor (21) für sichtbares Licht und der zweite Sensor (22) für infrarotes Licht ausgelegt ist, der erste Sensor somit ein RGB-Detektor und der zweite Sensor ein IR-Detektor ist.

10. Verfahren nach einem der vorhergehenden Ansprüche,
**dadurch gekennzeichnet, dass**
in dem Auswertsystem (28), mit Hilfe der Bildsignale (60) der mindestens zwei lichtempfindlichen Sensoren (21, 22) zumindest zwei, insbesondere digitale oder zumindest digitalisierbare, Bilder einer Bildanalyse zuführbar sind, mit deren Hilfe insbesondere in Echtzeit eine Gestaltdedektion, wie eine Detektion einer lokalen Struktur (96), durchführbar ist.

11. Verfahren nach einem der vorhergehenden Ansprüche,
**dadurch gekennzeichnet, dass**
die mit den Sensoren (21, 22) aufgenommenen Bilder bei der Bildanalyse überlagert werden und mittels bildtechnischer Verfahren bearbeitet werden.

12. Verfahren nach einem der vorhergehenden Ansprüche,
**dadurch gekennzeichnet, dass**
zusätzlich ein drittes Licht mit einem dritten Wellenlängenbereich mit der Fasern beinhaltenden Bahn (4) in Wechselwirkung tritt, diese vorzugsweise in der Art einer Streiflichtbeleuchtung streift, wodurch lokale Topographieunterschiede der Fasern beinhaltenden Bahn (4), wie Rakelstreifen, Siebmakierungen, Narbigkeit, detektiertbar sind.

13. Messvorrichtung (1) zur optischen Erfassung und Auswertung von charakteristischen Eigenschaften, wie Störungen im Erscheinungsbild, einer bewegten, fasern, wie Zellstofffasern, beinhaltenden Bahn (4) mit zumindest den folgenden Komponenten:
- ein erstes Licht (48) einer Lichtquelle (16, 20) mit einem ersten Wellenlängebereich, ein zweites Licht (52) einer Lichtquelle (16, 20) mit einem zweiten Wellenlängebereich, die mit der Fasern beinhaltenden Bahn in Wechselwirkung treten und
- mindestens eine Bildkamera mit einer lichtempfindlichen Sensorvorrichtung (12) zum Generieren von Bildsignalen (60), und ein Auswertsystem
**dadurch gekennzeichnet, dass**
innerhalb des Kameragehäuses (5) eine Vorrichtung angeordnet ist, die das erste und zweite Licht (48,52) entsprechend der Wellenlänge auf der unterschiedliche Sensoren (21, 22) lenkt, die auf der Sensorvorrichtung (12) positioniert sind.

14. Vorrichtung nach Anspruch 13,
**dadurch gekennzeichnet, dass**
ein erstes und ein zweites, von dem ersten unstörbares, verfahrensgemäßes Messsystem (2, 3) und ein erstes und ein zweites Auswertesystem (28, 29) vorhanden sind, wobei das erste Messsystem (2) im Zusammenwirken mit dem ersten Auswertesystem (28) charakteristische Eigenschaften der Oberseite der Fasern beinhaltenden Bahn (4) und das zweite Messsystem (3) im Zusammenwirken mit dem zweiten Auswertesystem charakteristische Eigenschaften der Unterseite der Fasern beinhaltenden Bahn (4) erfassen und ermitteln.

15. Vorrichtung nach Anspruch 13,
**dadurch gekennzeichnet, dass**
das Auswertesystem (28, 29) die charakteristischen Eigenschaften der Fasern beinhaltenden Bahn (4) im Zusammenwirken mit dem Messsystem (2, 3) in Echtzeit, d. h. so schnell ermittelt, dass mit Hilfe einer Rückkoppelung von die charakteristischen Eigenschaften abbildenden physikalischen Größen, wie einem elektrischen Strom oder einer elektrischen Spannung, Störungen im Erscheinungsbild der Fasern beinhaltenden Bahn (4) ausregelbar sind.
